# EUROPEAN PATENT SPECIFICATION

(11) **EP 1 025 567 B1**
(45) Date of publication and mention of the grant of the patent: **23.04.2003**
(21) Application number: 98946600.8
(22) Date of filing: 09.10.1998
(51) Int. Cl.: G21C 19/46

(54) **NUCLEAR FUEL REPROCESSING**
WIEDERAUFBEREITUNG VON KERNBRENNSTOFFEN
RETRAITEMENT DE COMBUSTIBLE NUCLEAIRE

(30) Priority: 25.10.1997 GB 9722496
(43) Date of publication of application: 09.08.2000
(73) Proprietor: British Nuclear Fuels PLC, Warrington, Cheshire WA3 6AS (GB)
(72) Inventor: HOBBS, Jeffrey, William, British Nuclear Fuels plc, Cumbria CA20 1PG (GB); PARKES, Peter, British Nuclear Fuels plc, Cumbria CA20 1PG (GB)
(74) Representative: Harrison Goddard Foote
(86) International application number: GB9803035
(87) International publication number: WO99022379

(56) References cited:
- FR-A- 2 295 533
- FR-A- 2 717 001
- GB-A- 2 004 407
- GB-A- 2 313 471

## Description

The present invention relates to the reprocessing of spent nuclear fuel.

The normal process used for recycling irradiated nuclear fuel is the PUREX process¹. In this process, spent fuel rods are sheared into small pieces, which are contacted with nitric acid. The nitric acid dissolves uranium, plutonium and fission products. The uranium and plutonium are extracted into a solvent (tributyl phosphate diluted with paraffin). Thereafter, the plutonium is separated from the uranium by a further solvent extraction technique. The PUREX purification process has been operated commercially for many years and is well known to those in the nuclear industry.

Modifications of the PUREX process have also been developed. For example, GB-A-2004407 discloses a process wherein the plutonium in a plutonium-containing stream is separated from neptunium and uranium by bringing a solution of the three materials in an organic solvent into contact with an aqueous solution of a hydroxylamine and/or a hydrazine salt at 30-35°C to preferentially reduce the neptunium and to extract it into the aqueous phase, and then bringing the organic solution into contact with an aqueous phase containing a hydroxylamine and/or hydrazine salt at about 50°C to preferentially reduce the plutonium and to extract it into the aqueous phase, thereby leaving the uranium in the organic solvent.

GB-A-2313471 which is published later than the priority data of the present application and therefore not a part of prior art, teaches a process which is useful for the separation of actinides from highly active raffinates which are produced during the PUREX process. Thus, an organic solution containing a mixture of these materials is contacted with an aqueous medium containing pertechnetate ions, thereby facilitating extraction of the actinide ions by virtue of the interaction between these ions and the nitrogen atoms of the extractants.

FR-A-2717001, on the other hand, describes a method for the removal of technetium during the solvent extraction of spent nuclear fuel in the PUREX process, the method involving a multistage treatment wherein nitric acid is used for to remove heptavalent technetium from the solvent phase, leaving uranium and plutonium which may then be more readily separated.

An alternative technique has been disclosed in FR-A-2295533, which discloses a process for reprocessing nuclear fuel that leads to fewer environmental hazards and does not involve the separation of uranium and plutonium following solvent extraction, since it relies on the distribution of plutonium in small proportions over the preponderance of nuclear fuel material which serves in nuclear reactors.

CANDU reactors are moderated by heavy water and thus the most efficient reactors in terms of neutron usage. They can therefore use natural uranium fuel, even in the form of the oxide. It has been proposed to re-irradiate spent PWR fuel in CANDU reactors using a scheme avoiding the PUREX process. Such fuel cycles for using spent PWR fuel in CANDU reactors are usually referred to as DUPIC fuel cycles (DUPIC = Dual Use of spent PWR fuel In CANDU reactors). A major constraint on DUPIC fuel cycles is the requirement to minimise the potential for diversion of fissile material (notably plutonium). In prior art proposals, diversion of fissile material has been safeguarded against by avoiding chemical processing. In one proposed process, there is used for the recycle of oxide fuel a dry oxidation-reduction process which uses only gaseous and solid materials. The end product can either be blended with uranium or plutonium and pelletised for use in a thermal reactor or pelletised without blending and used in a CANDU reactor.

The proposed DUPIC fuel cycles are inflexible, in that they cannot be applied to the use of irradiated fuel in natural cored reactors other than CANDU reactors or modified for use in enriched cored reactors.

The present invention provides a process for reprocessing irradiated nuclear fuel comprising dissolution of the fuel followed by solvent extraction but in which the uranium and plutonium are not separated. The dissolved uranium and plutonium (plus in practice residual fission products, Np and Tc) are then processed into a nuclear fuel product without being separated, this processing involving gel precipitation. Thus, the present process differs from the process of FR-A-2295533, which does not involve gel precipitation.

In another aspect, the invention provides a modification of the PUREX process in which the dissolved uranium and plutonium are not separated after primary separation of fission products but are processed into a nuclear fuel product without being separated, the process involving gel precipitation.

Preferred embodiments of the invention are set forth in the accompanying dependent claims.

The present invention is further described by way of example only with reference to the accompanying drawings, in which:
Figure 1 is a simplified flow sheet of the PUREX process; and
Figure 2 is a flow sheet of a process of the invention.

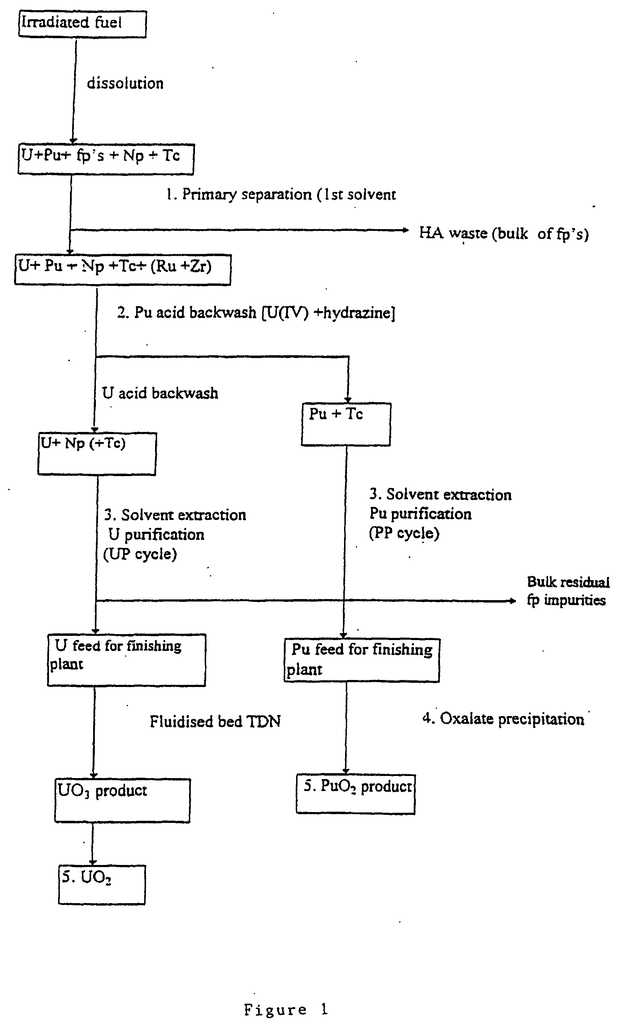

Figure 1, therefore, illustrates the existing and well-known PUREX recycling procedure. No detailed explanation of the procedure is required here. However, it will be noted that it is a complex multi-stage procedure which involves separation and purification of uranium and plutonium. Such separation creates risk of diversion of the plutonium. The end product UO₂ and PuO₂ products can be blended back together to produce MOX fuel or stored.

The process of the invention involves primary separation of fission products, for example using a procedure similar to the primary separation step of the PUREX process, but thereafter departs from the PUREX flow sheet in not separating the uranium and plutonium and going through the UP and PP cycles. Rather, the primary separation step is followed, if necessary or desirable, by further removal of contaminants (especially of the neutron poisons Np and Tc). The solution remaining after any such removal of further contaminants may be processed into a natural cored reactor fuel or into an enriched cored reactor, for example using a procedure known *per se*. An exemplary natural cored reactor is the CANDU reactor.

The solution may be processed by gel-precipitation or even by conversion into oxide powder, for example for fabrication into fuel pellets.

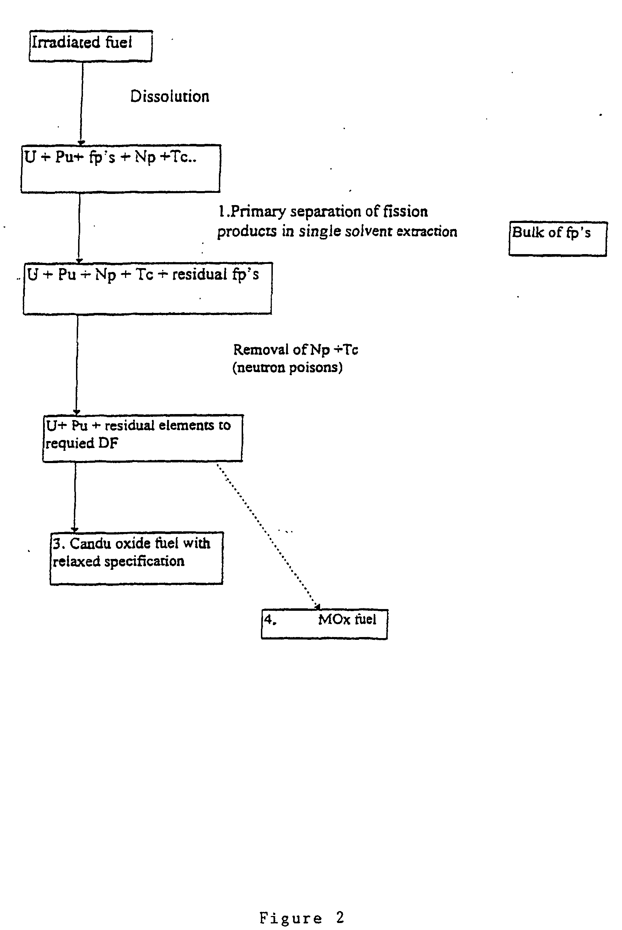

An exemplary process of the invention, therefore, is illustrated by Figure 2. Irradiated fuel is dissolved, for example using nitric acid as in the PUREX process. Alternatively, the spent fuel may be dissolved in an aqueous carbonate-containing medium, for example as described in EP-A-282810.

Following dissolution, the resultant liquor is subjected to primary separation of fission products by solvent extraction, preferably but not necessarily in a single solvent extraction step.

The primary solvent extraction of the PUREX process gives decontamination factors (DFs) of at least 1,000 for all species except Np and Tc (the DF for a species is determined by dividing its activity in the feed solution by its activity in the final solution). Both these metals are neutron poisons and it may be necessary or desirable to remove them after the primary solvent extraction.

The solution remaining after the primary solvent extraction and any removal of Np and Tc may be processed into CANDU oxide fuel with a relaxed specification. Alternatively, the solution may be processed into a MOX fuel (MOX = mixed oxide (UO₂ + PuO₂)), by blending the U, Pu with additional fissile material (enriched uranium comprising U-235 or plutonium). The additional fissile material may be blended with product of the invention either as oxide powder or as a nitrate solution. An exemplary MOX fuel is light water reactor (LWR) fuel. The specification of LWR fuel is similar to that of CANDU fuel, which means that the process of the invention is flexible in being usable to make either fuel.

The solution may be processed into CANDU oxide fuel by, for example, one of the following methods (i) the oxide as powder or granules could be pressed into pellets; or (ii) the oxide as powder granules of optimised size distribution could be poured directly into a fuel pin using vibro-compaction. However, it has been found that optimum results are achieved when the product stream is processed by gel-precipitation, for example to produce vibro-spherical fuel.

The metal nitrates in the solution may be converted to their oxides by concentrating the nitric acid product stream and converting the U, Pu nitrates into oxides. The concentrated solution may be finished to oxide powder by thermal denitration (TDN) or, less preferably, by precipitation, and then be fabricated into fuel pellets. The oxide powder will often require milling to ensure that pellets of high enough density are formed on pressing the powder.

Gel precipitation is particularly preferred as a processing technique, because the material inherently has relatively high radioactivity as a result of its low decontamination factor. Such high radioactivity means that it is very beneficial to use processes which offer the opportunity for operating with high levels of shielding, automation, low maintenance and a low number of process stages. Gel precipitation can offer such benefits as well as a dust free process. The product of gel precipitation is free flowing but not dusty.

Gel-precipitation is also a preferred technique for processing the solution into MOX fuel.

Gel-precipitation was introduced in the early 1970's primarily as a method of producing fast reactor fuel that could be loaded directly into the fuel pin. There are 2 principle methods. Internal gelation involves the formation of droplets in an immiscible liquid (silicone oil or a chlorinated hydrocarbon) or in air. Homogeneous precipitation occurs because hexamethylene tetramine in the feed solution undergoes thermal decomposition and releases ammonia internally as the sphere drops in the hot gelation media.

External gelation, or polymer supported precipitation, involves the addition of a water soluble organic polymer to a nitrate feed solution (eg a solution of Pu(NO₃)₄ and UO₂(NO₃)₂). This additive maintains the structure of the droplet as it precipitates when contacted with ammonia gas or an ammonium solution.

The gel spheres are typically washed in hot water to remove reaction products from the gelation stage and then dried, for example by extracting the water into hexanol or another solvent. The spheres are calcined in, usually, a carbon dioxide atmosphere to debond them, i.e. to remove polymer and convert the spheres to microspheres of porous metal oxide.

The gel-precipitation process used is not critical. The skilled reader will not need instruction as to gel-precipitation techniques, but one technique which may be mentioned is the so-called KEMA internal gelation route, originally devised in 1974² but further developed subsequently. An alternative technique is an external gel-precipitation method developed by the UK Atomic Energy Authority³⁻⁶. More recently there has been developed another applicable process called total gelation, which in effect combines the internal and external routes^{7,8}.

The invention enables provision of a process for recycling nuclear fuel into CANDU or thermal reactors; of this latter category, LWRs are preferred. The invention has the potential to generate more electricity for the same volume of high-level waste than once-through irradiated fuel, and therefore represents a significant environmental advance. Nonetheless, the invention primarily uses PUREX technology, in which there is an abundance of industrial experience as well as ongoing development; other familiar techniques usable in the invention include gel-precipitation and vibro fuel production.

The invention is resistant to diversion of plutonium, not only because it is not separated from uranium but also because the intermediate and final products will in practice contain residual fission products, Np and Tc. These contaminants make the products more difficult to handle safely and require special facilities for their removal.

### REFERENCES

1. Chemistry of Purex Process, J Melvyn McKibber, Radiochimica Acta 36(1984) 3-15.
2. J.B.W. Kanij, A.J. Noothout and O. Votocek. The KEMA (U(VI)-process for the production of microspheres. IAEA-161 (1974) p185-195.
3. GB-A-2023110.
4. US 4284593.
5. B. Stringer, P.J. Russell, B.W. Davies and K.A. Danso. Basic aspects of the gel-precipitation route to nuclear fuel. Radiochimica Acta 36(1984)31.
6. GB-A-1575300.
7. Zhichang et al, The First Pacific Rim International Conference on Advanced Materials and Processing, Hanzhou, China, June 23-27, 1992.
8. Zhichang et al, the preparation of UO₂ ceramic microspheres with an advanced process (TGU), China Nuclear Science and Technology Report, CHIC-0073, 1994.

## Claims

1. A process for reprocessing irradiated nuclear fuel comprising dissolution of the fuel followed by solvent extraction wherein the dissolved uranium and plutonium are not separated, which further includes processing the dissolved uranium and plutonium into a nuclear fuel product, **characterised in that** said further processing includes the fabrication of fuel using gel precipitation.

2. A process of Claim 1 wherein the fuel is dissolved in nitric acid.

3. A process of Claim 1 or Claim 2 wherein dissolution of the fuel is followed by separation from the solution of fission products.

4. A process of any of Claims 1 to 3 wherein dissolution of the fuel is followed by removal from the solution of one or both of Np and Tc.

5. A process of Claim 4 wherein the Np and Tc are removed after the fission products have been separated.

6. A modification of the PUREX process wherein the dissolved uranium and plutonium are not separated after primary separation of fission products but are processed into a nuclear fuel product without being separated, said process involving gel precipitation.

7. A process of any of Claims 1 to 6 which further includes combining extra fissile material with uranium and plutonium to make MOX fuel for LWRs.

8. A process of Claim 7 wherein the fissile material comprises Pu.

9. A process of Claim 7 wherein the fissile material comprises U-235.

10. A process of any of Claims 1 to 9 wherein the nuclear fuel product is for a natural cored reactor.

11. A process of any of Claims 1 to 9 wherein the nuclear fuel product is for an enriched cored reactor.

## Patentansprüche

1. Wiederaufbereitungsverfahren für bestrahlten Kernbrennstoff, das die Auflösung des Brennstoffs, gefolgt von Solvent Extraktion umfasst, worin das gelöste Uran und Plutonium nicht voneinander getrennt werden, welches weiterhin die Verarbeitung des gelösten Urans und Plutoniums zu einem Kernbrennstoffprodukt einschließt, **dadurch gekennzeichnet, dass** diese weitere Verarbeitung die Herstellung von Brennstoff unter Verwendung von Gel-Ausfällung einschließt.

2. Verfahren nach Anspruch 1, worin der Brennstoff in Salpetersäure gelöst wird.

3. Verfahren nach Anspruch 1 oder Anspruch 2, worin dem Lösen des Brennstoffs die Abtrennung der Spaltprodukte aus der Lösung folgt.

4. Verfahren nach irgendeinem der Ansprüche 1 bis 3, worin dem Lösen das Entfernen von Np oder Tc oder von beiden aus der Lösung folgt.

5. Verfahren nach Anspruch 4, worin das Np und Tc entfernt werden, nachdem die Spaltprodukte abgetrennt worden sind.

6. Modifikation des PUREX-Verfahrens, worin das gelöste Uran und Plutonium nach der anfänglichen Abtrennung der Spaltprodukte nicht voneinander getrennt werden, sondern zu einem Kernbrennstoffprodukt verarbeitet werden ohne voneinander getrennt zu werden, wobei dieses Verfahren eine Gel-Ausfällung einschließt.

7. Verfahren nach irgendeinem der Ansprüche 1 bis 6, welches weiterhin das Kombinieren von zusätzlichem Spaltmaterial mit dem Uran und Plutonium einschließt, um MOX-Brennstoff für LWR herzustellen.

8. Verfahren nach Anspruch 7, worin das Spaltmaterial Pu umfasst.

9. Verfahren nach Anspruch 7, worin das Spaltmaterial U-235 umfasst.

10. Verfahren gemäß irgendeinem der Ansprüche 1 bis 9, worin das Kernbrennstoffprodukt für einen mit natürlichen Brennstoff beschickten Reaktor bestimmt ist.

11. Verfahren gemäß irgendeinem der Ansprüche 1 bis 9, worin das Kernbrennstoffprodukt für einen mit angereichertem Brennstoff beschickten Reaktor bestimmt ist.

## Revendications

1. Procédé de retraitement de combustible nucléaire irradié comprenant la dissolution du combustible suivi d'une extraction de solvant **caractérisé en ce que** le plutonium et l'uranium dissouts ne sont pas séparés, qui inclut de plus le traitement de l'uranium et du plutonium dissout dans un produit de combustible nucléaire, **caractérisé en ce que** ledit autre traitement inclut la fabrication de combustible en utilisant la précipitation en gel.

2. Procédé selon la revendication 1, **caractérisé en ce que** le combustible est dissout dans l'acide nitrique.

3. Procédé selon la revendication 1 ou 2, **caractérisé en ce que** la dissolution du combustible est suivie d'une séparation de la solution des produits de fission.

4. Procédé selon l'une des revendications 1 à 3, **caractérisé en ce que** la dissolution du combustible est suivie de l'enlèvement de la solution de l'un, ou des deux, du Np et Tc.

5. Procédé selon la revendication 4, **caractérisé en ce que** le Np et Tc sont enlevés après que les produits de fission aient été séparés.

6. Modification du procédé PUREX, **caractérisé en ce que** le plutonium et l'uranium dissouts ne sont pas séparés après la séparation primaire des produits de fission mais sont traités dans un produit de combustible nucléaire sans être séparés, ledit procédé impliquant la précipitation en gel.

7. Procédé selon l'une des revendications 1 à 6 qui inclut de plus la combinaison de substances extra-fissibles avec l'uranium et le plutonium pour réaliser du combustible MOX pour des réacteurs à eau légère.

8. Procédé selon la revendication 7, **caractérisé en ce que** la substance fissible comprend du Pu.

9. Procédé selon la revendication 7, **caractérisé en ce que** la substance fissible comprend du U-235.

10. Procédé selon l'une des revendications 1 à 9, **caractérisé en ce que** le produit combustible nucléaire est pour un réacteur un coeur naturel.

11. Procédé selon l'une des revendications 1 à 9, **caractérisé en ce que** le produit combustible nucléaire est pour un réacteur à coeur enrichi.
